# EUROPEAN PATENT APPLICATION

(11) **EP 4 297 377 A1**
(43) Date of publication of application: **27.12.2023**
(21) Application number: 23176239.4
(22) Date of filing: 30.05.2023
(51) Int. Cl.: H04L 69/08

(54) **METHODS AND SYSTEMS FOR PROTOCOL COMPATIBILITY**

(30) Priority: 23.06.2022 CN 202210718549
(71) Applicant: Zhejiang Dahua Technology Co., Ltd., Hangzhou, Zhejiang 310053 (CN)
(72) Inventor: YIN, Jun, Hangzhou, Zhejiang, 310053 (CN); ZHU, Leiguang, Hangzhou, Zhejiang, 310053 (CN); ZHOU, Xiangming, Hangzhou, Zhejiang, 310053 (CN); CHEN, Boyang, Hangzhou, Zhejiang, 310053 (CN); MAO, Jiali, Hangzhou, Zhejiang, 310053 (CN); WANG, Chao, Hangzhou, Zhejiang, 310053 (CN)
(74) Representative: Wang, Bo

(57) **Abstract**

The present disclosure relates to a method for protocol compatibility, the method comprises: obtaining (410) an original protocol (110-1) supported by a machine learning framework; determining (415) at least one function type supported by the original protocol (110-1); determining (420) a filter condition based on the at least one function type; filtering out (430), from a protocol set, a target protocol (110-2) satisfying the at least one function type based on the filter condition; and determining (440) a compatible protocol (110-3) based on the target protocol (110-2) and the original protocol (110-1).

## Description

### CROSS-REFERENCE TO RELATED APPLICATIONS

This application claims priority to Chinese patent application 202210718549.9 filed on June 23, 2022, the entire content of which is incorporated herein by reference.

### TECHNICAL FIELD

The present disclosure relates to the field of data transmission, and in particular, to methods and systems for protocol compatibility.

### BACKGROUND

With the development of machine learning technology (e.g., deep learning), various machine learning frameworks become increasingly popular and accordingly derive various protocols. For different protocols, even if they are similar, data modules can't be shared. Therefore, it is desirable to provide methods and systems for protocol compatibility to improve the application and efficiency of various machine learning frameworks.

### SUMMARY

An aspect of the present disclosure provides a method for protocol compatibility. The method comprises: obtaining (410) an original protocol (110-1) supported by a machine learning framework; determining (415) at least one function type supported by the original protocol (110-1); determining (420) a filter condition based on the at least one function type; filtering out (430), from a protocol set, a target protocol (110-2) satisfying the at least one function type based on the filter condition; and determining (440) a compatible protocol (110-3) based on the target protocol (110-2) and the original protocol (110-1).

Another aspect of the present disclosure provides a system for protocol compatibility, including: an obtaining module (310), configured to obtain an original protocol (110-1) supported by a machine learning framework; a first determination module (315), configured to determine at least one function type supported by the original protocol (110-1); a second determination module (320), configured to determine a filter condition based on the at least one function type; a filter module (330), configured to filter out, from a protocol set, a target protocol (110-2) satisfying the at least one function type based on the filter condition; and a compatibility module (340), configured to determine a compatible protocol (110-3) based on the target protocol (110-2) and the original protocol (110-1).

A further aspect of the present disclosure provides a computer-readable storage medium storing computer instructions, where in when the computer instructions are executed by a processor, the processor executes a method comprising: obtaining (410) an original protocol (110-1) supported by a machine learning framework; determining (415) at least one function type supported by the original protocol (110-1); determining (420) a filter condition based on the at least one function type; filtering out (430), from a protocol set, a target protocol (110-2) satisfying the at least one function type based on the filter condition; and determining (440) a compatible protocol (110-3) based on the target protocol (110-2) and the original protocol (110-1).

### BRIEF DESCRIPTION OF THE DRAWINGS

This specification will be further illustrated by way of exemplary embodiments, which will be described in detail with the accompanying drawings. These examples are non-limiting, and in these examples, the same number indicates the same structure, wherein:
FIG. 1 is a schematic diagram illustrating an exemplary protocol compatibility system according to some embodiments of the present disclosure;
FIG. 2 is a schematic diagram illustrating exemplary hardware and/or software components of an exemplary computing device according to some embodiments of the present disclosure.
FIG. 3 is a block diagram illustrating an exemplary processing device according to some embodiments of the present disclosure;
FIG. 4 is a flowchart illustrating an exemplary process for protocol compatibility according to some embodiments of the present disclosure;
FIG. 5 is a flowchart illustrating an exemplary process for determining a compatible protocol according to some embodiments of the present disclosure;
FIG. 6 is a flowchart illustrating an exemplary process for determining a compatible protocol according to some other embodiments of the present disclosure;
FIG. 7A is a flowchart illustrating an exemplary process for determining a compatible protocol according to some other embodiments of the present disclosure;
FIG. 7B is a flowchart illustrating an exemplary process for determining a compatible protocol according to some other embodiments of the present disclosure;
FIG. 8A is a flowchart illustrating an exemplary process for determining a compatible protocol according to some other embodiments of the present disclosure. and
FIG. 8B is a flowchart illustrating an exemplary process for determining a compatible protocol according to some other embodiments of the present disclosure.

### DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively high level, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown, but to be accorded the widest scope consistent with the claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in the present disclosure, specify the presence of stated features, integers, steps, operations, elements, and/or components, but do not preclude the presence or addition of one or more other features, integers, steps, operations, elements, components, and/or groups thereof.

It will be understood that the terms "system," "engine," "unit," "module," and/or "block" used herein are one method to distinguish different components, elements, parts, sections, or assemblies of different levels in ascending order. However, the terms may be displaced by other expressions if they may achieve the same purpose.

It will be understood that when a unit, engine, module or block is referred to as being "on," "connected to," or "coupled to," another unit, engine, module, or block, it may be directly on, connected or coupled to, or communicate with the other unit, engine, module, or block, or an intervening unit, engine, module, or block may be present, unless the context clearly indicates otherwise. As used herein, the term "and/or" includes any and all combinations of one or more of the associated listed items.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

In machine learning field (e.g., AI open platform), a user can upload a data function module described based on a machine learning framework (e.g., a deep learning framework), or download data function modules uploaded by other users. When a user uses a machine learning framework to execute a data function module, a corresponding layer protocol in a corresponding layer structure should be used to execute data file input. When the user wants to use a data function module uploaded by another user, if a local layer protocol used by the user is inconsistent with a corresponding layer protocol used by the other user, the data function module can't be analyzed or used. Accordingly, the present disclosure provides a method for protocol compatibility to realize that data can be transmitted or used among different protocols provided in an AI open platform. Specifically, an original protocol supported by a machine learning framework (e.g., a deep learning framework) is obtained and at least one function type supported by the original protocol is determined. Then a filter condition is determined based on the at least one function type and a target protocol satisfying the at least one function type is filtered out from a protocol set based on the filter condition. Further, a compatible protocol is determined based on the target protocol and the original protocol, thereby realizing efficient protocol compatibility among machine learning frameworks.

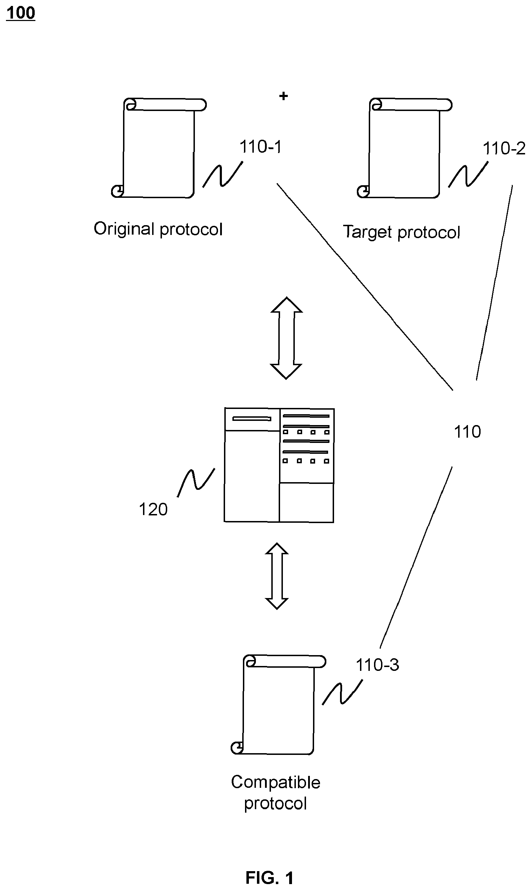

FIG. 1 is a schematic diagram illustrating an exemplary protocol compatibility system according to some embodiments of the present disclosure. In some embodiments, the protocol compatibility system 100 may include a processing device 120, which may be configured to process a protocol 110 (e.g., an original protocol 110-1, a target protocol 110-2, a compatible protocol 110-3), for example, perform protocol compatibility based on the original protocol 110-1 and the target protocol 110-2 to obtain the compatible protocol 110-3.

The protocol 110 may be used for data file transmission or data file transfer. In some embodiments, protocols 110 from different manufacturers may have the same common layer definitions, but some new layers may have different versions which may cause incompatibility. For example, taking protocols in an up-sampling layer of caffe framework as an example, users may design different versions of up-sampling layer protocols (or referred to as "different up-sampling layer protocols) according to different environments. When data based on a specific version of up-sampling layer protocol is input into another version of up-sampling layer protocol, a caffe. proto file of another up-sampling layer protocol may be used to analyze the data, which may result in analysis failure and data error.

In some embodiments, the protocol 110 may be analyzed into protocol parameters, and the protocol parameters may be in a form of full strings, including a complete layer description and a layer connection structure to be actually run.

The processing device 120 may process (e.g., perform protocol compatibility) the protocol 110. For example, the processing device 120 may perform protocol compatibility based on the target protocol 110-2 and the original protocol 110-1. In some embodiments, the processing device 120 may obtain the original protocol 110-1 supported by a machine learning framework and obtain at least one function type supported by the original protocol 1101. Then the processing device 120 may determine a filter condition based on the at least one function type and filter out the target protocol 110-2 satisfying the at least one function type from a protocol set based on the filter condition. Further, the processing device 120 may determine a compatible protocol 110-3 based on the original protocol 110-1 and the target protocol 110-2.

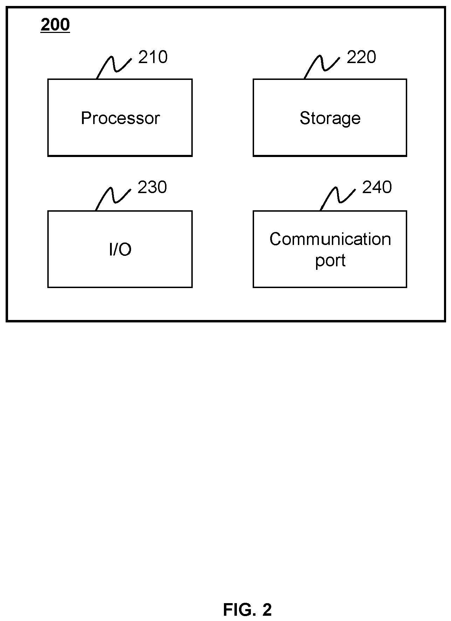

In some embodiments, the processing device 120 may be a single server or a server group. The server group may be centralized or distributed. In some embodiments, the processing device 120 may be local or remote. In some embodiments, the processing device 120 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the processing device 120 may be implemented by a computing device 200 having one or more components illustrated in FIG. 2.

In some embodiments, the protocol compatibility system 100 may further include a storage device, a network, a terminal device, etc., which are not shown in the figure.

In some embodiments, the network may be or include a public network (e.g., the Internet), a private network (e.g., a local area network (LAN)), a wired network, a wireless network (e.g., an 802.11 network, a Wi-Fi network), a frame relay network, a virtual private network (VPN), a satellite network, a telephone network, routers, hubs, switches, server computers, and/or any combination thereof. For example, the network may include a cable network, a wireline network, a fiber-optic network, a telecommunications network, an intranet, a wireless local area network (WLAN), a metropolitan area network (MAN), a public telephone switched network (PSTN), a Bluetooth^{™} network, a ZigBee^{™} network, a near field communication (NFC) network, or the like, or any combination thereof. In some embodiments, the network may include one or more network access points. For example, the network may include wired and/or wireless network access points such as base stations and/or internet exchange points through which one or more components of the protocol compatibility system 100 may be connected to the network to exchange data and/or information.

In some embodiments, the storage device may store data, instructions, and/or any other information. In some embodiments, the storage device may store data and/or instructions related to protocol compatibility. For example, the storage device may the store the protocol 110. As another example, the storage device may store instructions that the processing device 120 may use to execute protocol compatibility. In some embodiments, the storage device may include a mass storage, removable storage, a volatile read-and-write memory, a read-only memory (ROM), or the like, or any combination thereof. may be implemented on a cloud platform. In some embodiments, the storage device may be integrated into the processing device 120 and/or the terminal device.

In some embodiments, the storage device may be connected to the network to communicate with one or more other components (e.g., the processing device 120) of the protocol compatibility system. One or more components of the protocol compatibility system may access data or instructions stored in the storage device through the network.

In some embodiments, a user may interact with the protocol compatibility system 100 via the terminal device. Exemplary terminal device may include a mobile device, a tablet, a laptop, or the like, or any combination thereof.

It should be noted that the above description is merely provided for the purposes of illustration, and not intended to limit the scope of the present disclosure. For persons having ordinary skills in the art, multiple variations and Modifications may be made under the teachings of the present disclosure. However, those variations and modifications do not depart from the scope of the present disclosure. In some embodiments, the protocol compatibility system may include one or more additional components and/or one or more components of the protocol compatibility system 100 described above may be omitted. Additionally or alternatively, two or more components of the protocol compatibility system 100 may be integrated into a single component. A component of the protocol compatibility system 100 may be implemented on two or more sub-components.

FIG. 2 is a schematic diagram illustrating exemplary hardware and/or software components of an exemplary computing device according to some embodiments of the present disclosure. In some embodiments, the processing device 120 and/or the terminal device may be implemented on the computing device 200. As illustrated in FIG. 2, the computing device 200 may include a processor 210, a storage 220, an input/output (I/O) 230, and a communication port 240.

The processor 210 may execute computer instructions (e.g., program code) and perform functions of the processing device 120 in accordance with techniques describable herein. The computer instructions may include, for example, routines, programs, objects, components, data structures, procedures, modules, and functions, which perform particular functions describable herein.

In some embodiments, the processor 210 may include one or more hardware processors, such as a microcontroller, a microprocessor, a reduced instruction set computer (RISC), an application specific integrated circuits (ASICs), an application-specific instruction-set processor (ASIP), a central processing unit (CPU), a graphics processing unit (GPU), a physics processing unit (PPU), a microcontroller unit, a digital signal processor (DSP), a field programmable gate array (FPGA), an advanced RISC machine (ARM), a programmable logic device (PLD), any circuit or processor capable of executing one or more functions, or the like, or any combinations thereof.

Merely for illustration, only one processor is describable in the computing device 200. However, it should be noted that the computing device 200 in the present disclosure may also include multiple processors, thus operations and/or method operations that are performed by one processor as describable in the present disclosure may also be jointly or separately performed by the multiple processors. For example, if in the present disclosure the processor of the computing device 200 executes both operation A and operation B, it should be understood that operation A and operation B may also be performed by two or more different processors jointly or separately in the computing device 200 (e.g., a first processor executes operation A and a second processor executes operation B, or the first and second processors jointly execute operations A and B).

The storage 220 may store data obtained from one or more components of the protocol compatibility system 100. In some embodiments, the storage 220 may include a mass storage device, a removable storage device, a volatile read-and-write memory, a read-only memory (ROM), or the like, or any combination thereof. In some embodiments, the storage 220 may store one or more programs and/or instructions to perform exemplary methods describable in the present disclosure. For example, the storage 220 may store a program for the processing device 120 to execute protocol compatibility.

The I/O 230 may input and/or output signals, data, information, etc. In some embodiments, the I/O 230 may enable a user interaction with the processing device 120. In some embodiments, the I/O 230 may include an input device and an output device. The input device may include a keyboard, a touch screen, a speech input, an eye tracking input, a brain monitoring system, or any other comparable input mechanism. The input information received through the input device may be transmitted to another component (e.g., the processing device 120) via, for example, a bus, for further processing. Other types of the input devices may include a cursor control device, such as a mouse, a trackball, or cursor direction keys, etc. The output device may include a display (e.g., a liquid crystal display (LCD), a light-emitting diode (LED)-based display, a flat panel display, a curved screen, a television device, a cathode ray tube (CRT), a touch screen), a speaker, a printer, or the like, or a combination thereof.

The communication port 240 may be connected to a network to facilitate data communications. The communication port 240 may establish connections between the processing device 120 and the terminal device. The connection may be a wired connection, a wireless connection, any other communication connection that can enable data transmission and/or reception, and/or any combination of these connections. The wired connection may include, for example, an electrical cable, an optical cable, a telephone wire, or the like, or any combination thereof. The wireless connection may include, for example, a Bluetooth^{™} link, a Wi-Fi^{™} link, a WiMax^{™} link, a WLAN link, a ZigBee^{™} link, a mobile network link (e.g., 3G, 4G, 5G), or the like, or a combination thereof. In some embodiments, the communication port 240 may be and/or include a standardized communication port, such as RS232, RS485, etc. In some embodiments, the communication port 240 may be a specially designed communication port.

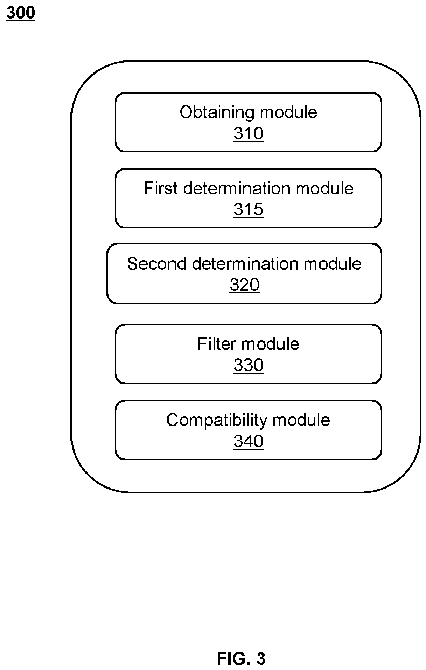

FIG. 3 is a block diagram illustrating an exemplary processing device according to some embodiments of the present disclosure. In some embodiments, the processing device 120 may include an obtaining module 310, a first determination module 315, a second determination module 320, a filter module 330, and a compatibility module 340.

The obtaining module 310 may be configured to obtain an original protocol 110-1 supported by a machine learning framework.

The first determination module 315 may be configured to determine at least one function type supported by the original protocol 110-1.

The second determination module 320 may be configured to determine a filter condition based on the at least one function type.

The filter module 330 may be configured to filter out, from a protocol set, a target protocol 110-2 satisfying the at least one function type based on the filter condition.

The compatibility module 340 may be configured to determine a compatible protocol 110-3 based on the target protocol 110-2 and the original protocol 110-1.

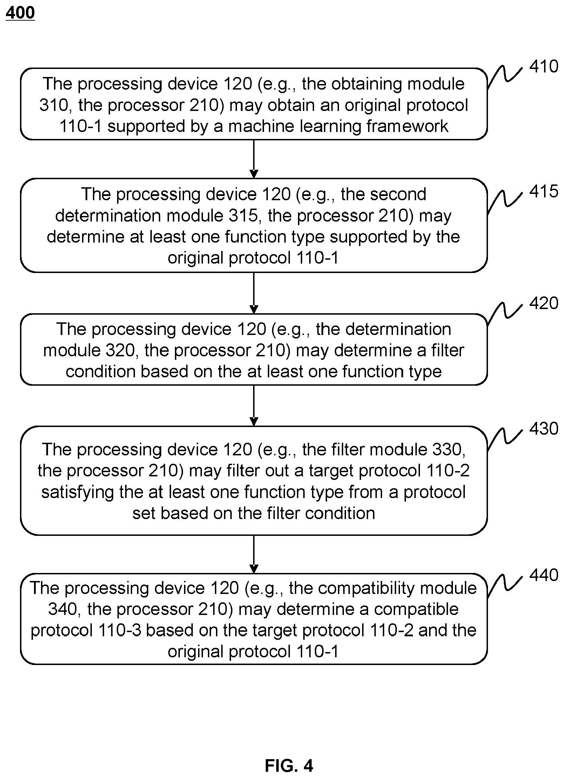

More descriptions regarding the obtaining module 310, the first determination module 315, the second determination module 320, the filter module 330, and the compatibility module 340 may be found in FIGs. 4-8 and descriptions thereof.

It should be noted that the above descriptions of the processing device 120 are provided for the purposes of illustration, and not intended to limit the scope of the present disclosure. For persons having ordinary skills in the art, various modifications and changes in the forms and details of the application of the above method and system may occur without departing from the principles of the present disclosure. In some embodiments, the processing device 120 may include one or more other modules and/or one or more modules described above may be omitted. Additionally or alternatively, two or more modules may be integrated into a single module and/or a module may be divided into two or more units. However, those variations and modifications also fall within the scope of the present disclosure.

FIG. 4 is a flowchart illustrating an exemplary process for protocol compatibility according to some embodiments of the present disclosure. In some embodiments, process 400 may be executed by the protocol compatibility system 100. For example, the process 400 may be implemented as a set of instructions stored in a storage device. In some embodiments, the processing device 120 (e.g., the processor 210 of the computing device 200 and/or one or more modules illustrated in FIG. 3) may execute the set of instructions and may accordingly be directed to perform the process 400. The operations of the illustrated process presented below are intended to be illustrative. In some embodiments, the process 400 may be accomplished with one or more additional operations not described and/or without one or more of the operations discussed. Additionally, the order of the operations of process 400 illustrated in FIG. 4 and described below is not intended to be limiting.

In 410, the processing device 120 (e.g., the obtaining module 310, the processor 210) may obtain an original protocol 110-1 supported by a machine learning framework.

The original protocol 110-1 may refer to a protocol corresponding to a local machine learning framework. For example, the original protocol 110-1 may be a caffe.proto file. In some embodiments, the processing device 120 may extract a protocol supported by the local machine learning framework as the original protocol 110-1.

In 415, the processing device 120 (e.g., the second determination module 315, the processor 210) may determine at least one function type supported by the original protocol 110-1.

The function type may refer to a type of a function supported by a protocol or a protocol parameter thereof. In some embodiments, there may be one or more function types supported by the original protocol 110-1. In some embodiments, the at least one function type may include a dimension transformation, a value transformation, a dimension transformation with separate width and height allocation, a pad function (e.g., a function for expanding a size of an image without changing original content of the image), a specified dimension output, or the like, or a combination thereof.

In some embodiments, the processing device 120 may obtain at least one original protocol parameter of the original protocol 110-1 and determine at least one function type supported by the original protocol 110-1 based on the at least one original protocol parameter.

The original protocol parameter may refer to a protocol parameter parsed from the original protocol 110-1. The protocol parameter may be in a form of full strings, including a complete layer description and a layer connection structure to be actually run. In some embodiments, after obtaining the original protocol 110-1, the processing device 120 may parse the original protocol 110-1 to obtain the at least one original protocol parameter.

In some embodiments, the processing device 120 may determine at least one initial protocol parameter of the original protocol 110-1, and determine whether the at least one initial protocol parameter includes a first protocol parameter and a second protocol parameter with a same function type and a same value. For example, if the first protocol parameter and the second protocol parameter with the same function type and the same value may be "scale-h" parameter and "scale-w" parameter respectively, and the initial protocol parameter does not include "stride" parameter, the "scale-h" parameter may correspond to a width of dimension transformation, the "scale-w" parameter may correspond to a height of the dimension transformation. As another example, if the first protocol parameter and the second protocol parameter with the same function type and the same value may be "stride-h" parameter and "stride-w" parameter respectively, and the initial protocol parameter does not include "scale" parameter, the "stride-h" parameter may correspond to a width of the dimension transformation, the "stride-w" parameter may correspond to a height of the dimension transformation.

Further, in response to determining that the at least one initial protocol parameter includes the first protocol parameter and the second protocol parameter with the same function type and the same value, the processing device 120 may determine a third protocol parameter corresponding to the function type based on the first protocol parameter and the second protocol parameter as one of the at least one original protocol parameter. Accordingly, the first protocol parameter and the second protocol parameter may be deleted, and the third protocol parameter may be determined as an original protocol corresponding to the function type. That is, the third protocol parameter may replace the first protocol parameter and the second protocol parameter and may be determined as one of the at least one original protocol parameter.

Furthermore, the processing device 120 may determine the at least one function type supported by the original protocol 110-1 based on the at least one original protocol parameter.

For example, as described in connection with above, if the at least one initial protocol parameter includes the "scale-h" parameter and the "scale-w" parameter, in response to that a value of the "scale-h" parameter and a value of the "scale-w" parameter are the same, the processing device 120 may combine the "scale-h" parameter and the "scale-w parameter" into a new parameter (i.e., the third protocol parameter, which can be referred to as a "scale" parameter in this situation). Accordingly, the "scale" parameter corresponds to the dimension transformation function, and its value is the same as that of the "scale-h" parameter or the "scale-w" parameter.

In response to determining the at least one initial protocol parameter does not include a first protocol parameter and a second protocol parameter with a same function type and a same value, the processing device 120 may determine that there is no need for the processing of the initial protocol parameter(s).

According to some embodiments of the present disclosure, the protocol parameters in the original protocol 110-1 are simplified, thereby reducing data amount in the original protocol 110-1 and reducing computing resource consumption in subsequent compatibility process.

In 420, the processing device 120 (e.g., the determination module 320, the processor 210) may determine a filter condition based on the at least one function type.

In some embodiments, as described in connection with above, the at least one function type may include a dimension transformation, a value transformation, a dimension transformation with separate width and height allocation, a pad function, a specified dimension output, or the like, or a combination thereof. Accordingly, the filter condition may include whether a protocol supports the dimension transformation, whether a protocol supports the value transformation, whether a protocol supports the dimension transformation with separate width and height allocation, whether a protocol supports the pad function, whether a protocol supports the specified dimension output, or the like, or a combination thereof.

In 430, the processing device 120 (e.g., the filter module 330, the processor 210) may filter out a target protocol 110-2 satisfying the at least one function type from a protocol set based on the filter condition.

The protocol set may refer to a set including various protocols (e.g., protocols commonly used in open source frameworks). In some embodiments, the protocol set may include a first protocol proto_darknet, a second protocol proto_SegNet, a third protocol proto_darknet_expand, a fourth protocol proto_other0, a fifth protocol proto_other1, a sixth protocol proto_other2, a seventh protocol proto_other3, etc.

In some embodiments, the original protocol 110-1 and protocols included in the protocol may correspond to a same layer of the machine learning framework. For example, taking the caffe deep learning framework as an example, caffe includes multiple hierarchical structures including a backbone hierarchical structure and other non-backbone hierarchical structures, each layer may correspond to one or more protocols for describing and transferring data files. Since the framework is open source, for a specific hierarchical structure layer, users may develop different versions of protocols according to various application scenarios. Accordingly, the original protocol 110-1 and the protocols in the protocol set may be the different versions of protocols in the same layer in the deep learning framework.

In some embodiments, the processing device 120 may filter out one or more protocols satisfying the at least one function type from the protocol set, and then determine the target protocol 110-2 from the one or more filtered protocols based on a target input scene (e.g., a scene to be input which may be pre-defined or set by a user).

In some embodiments, in response to determining the at least one function type includes at least two function types, during the filter process, the processing device 120 may perform multiple filter operations on the protocols in the protocol set based on the filter condition. In some embodiments, the multiple filter operations may at least include: performing a first filter operation on the protocols in the protocol set based on a first function type; determining a first filtered protocol set based on a filter result of the first filter operation; performing a second filter operation on the first filtered protocol set based on a second function type. Merely by way of example, it is assumed that the original protocol 110-1 supports a first function type and a second function type, which corresponds to a first filter condition and a second filter condition respectively. Accordingly, the processing device 120 may perform a first filter operation on the protocols in the protocol set based on the first filter condition and determine a first filtered protocol set based on a first filter result of the first filter operation. Then the processing device 120 may perform a second filter operation on protocols in the first filtered protocol set based on the second filter condition and determine a second filtered protocol set based on a second filter result of the second filter operation, and so on.

In some embodiments, relatively rare function type(s) may be used as relatively high-end filter conditions, accordingly, a relatively large number of protocols can be eliminated in the early stage, thereby reducing subsequent consumption of computing resources.

According to some embodiments of the present disclosure, a progressive filter process is performed, thereby reducing the computing resource consumption and speeding up protocol compatibility.

In some embodiments, in response to determining that the at least one function type includes a preset function type, the processing device 120 may determine whether the protocol set includes one or more protocols supporting the preset function type. In response to determining that there is no protocol supporting the preset function type in the protocol set, the processing device 120 may determine a compatibility failure; in response to determining that the protocol set includes one or more protocols supporting the preset function type, the processing device 120 may filter out the one or more protocols supporting the preset function type and determine the target protocol 110-2 based on the one or more protocols.

In some embodiments, in response to determining the at least one original protocol parameter includes the pad function and/or the specified dimension output, the processing device 120 may determine whether the protocol set includes one or more protocols supporting the pad function or the specified dimension output. In response to determining that there is no protocol supporting the pad function or the specified dimension output in the protocol set, the processing device 120 may determine a compatibility failure; in response to determining that the protocol set includes one or more protocols (e.g., the second protocol proto_SegNet) supporting the pad function or the specified dimension output, the processing device 120 may filter out the one or more protocols (e.g., the second protocol proto_SegNet) supporting the pad function or the specified dimension output and determine the target protocol 110-2 based on the one or more protocols. For example, the processing device 120 may determine the target protocol 110-2 by further filtering the one or more protocols based on a target input scene.

In some embodiments, in response to determining that the at least one function type includes a plurality of different function types, the processing device 120 may determine whether the protocol set includes one or more protocol supporting all the plurality of function types. In response to determining that there is no protocol supporting all the plurality of function types in the protocol set, the processing device 120 may determine a compatibility failure; in response to determining that the protocol set includes one or more protocols supporting all the plurality of function types, the processing device 120 may filter out the one or more protocols supporting all the plurality of function types and determine the target protocol 110-2 based on the one or more protocols.

In some embodiments, in response to determining that the at least one function type includes the dimension transformation and the value transformation, the processing device 120 may determine whether the protocol set includes one or more protocols supporting both the dimension transformation and the value transformation. In response to determining that there is no protocol supporting both the dimension transformation and the value transformation in the protocol set, the processing device 120 may determine a compatibility failure; in response to determining that the protocol set includes one or more protocols (e.g., the first protocol proto_darknet, the third protocol proto_darknet_expand, and the fifth protocol proto_other1) supporting both the dimension transformation and the value transformation, the processing device 120 may filter out the one or more protocols (e.g., the first protocol proto_darknet, the third protocol proto_darknet_expand, and the fifth protocol proto_other1) supporting both the dimension transformation and the value transformation and determine the target protocol 110-2 based on the one or more protocols. For example, the processing device 120 may determine the target protocol 110-2 by further filtering the one or more protocols based on a target input scene.

In 440, the processing device 120 (e.g., the compatibility module 340, the processor 210) may determine a compatible protocol 110-3 based on the target protocol 110-2 and the original protocol 110-1.

In some embodiments, the processing device 120 may perform compatibility on the original protocol 110-1 based on the target protocol 110-2 to determine the compatible protocol 110-3. The compatible protocol 110-3 can be input to the target input scene for use.

In some embodiments, in response to determining that there is no protocol satisfying the at least one function type in the protocol set based on the filter condition, that is, no target protocol can be filtered out, the processing device 120 may determine a compatibility failure.

In some embodiments, the processing device 120 may obtain the at least one original protocol parameter of the original protocol 110-1, modify at least one name of the at least one original protocol parameter and/or at least one value type of the at least one original protocol parameter based on at least one target protocol parameter of the target protocol 110-2, and determine the compatible protocol 110-3 based on the at least one modified protocol parameter.

In some embodiments, for each of the at least one original protocol parameter, the processing device 120 may obtain a function type supported by the original protocol parameter and determine a corresponding target protocol parameter supporting the same function type in the target protocol 110-2 based on the function type. Then the processing device 120 may determine whether the value type of the target protocol parameter and the value type of the original protocol parameter meet the transformation condition. In response to determining that the value type of the corresponding target protocol parameter and the value type of the original protocol parameter do not satisfy the transformation condition, the processing device 120 may determine a compatibility failure; in response to determining that the value type of the corresponding target protocol parameter and the value type of the original protocol parameter satisfy the transformation condition, the processing device 120 may transform the value type of the original protocol parameter to the value type of the corresponding target protocol parameter.

In some embodiments, for each of the at least one original protocol parameter, the processing device 120 may obtain a function type supported by the original protocol parameter and determine a corresponding target protocol parameter supporting the same function type in the target protocol 110-2 based on the function type. Then the processing device 120 may determine whether a name of the corresponding target protocol parameter and a name of the original protocol parameter are consistent. In response to determining that the name of the corresponding target protocol parameter and the name of the original protocol parameter are inconsistent, the processing device 120 may modify the name of the corresponding original protocol parameter to be consistent with the name of the target protocol parameter; in response to determining that the name of the corresponding target protocol parameter and the name of the original protocol parameter are consistent, the processing device 120 may determine that there is no need to modify the name of the original protocol parameter.

According to some embodiments of the present disclosure, a target protocol is filtered out from a protocol set and a compatible protocol is determined based on the target protocol and the original protocol. Accordingly, data transmission among different protocols can be efficiently realized.

It should be noted that the above description of the process 400 is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure.

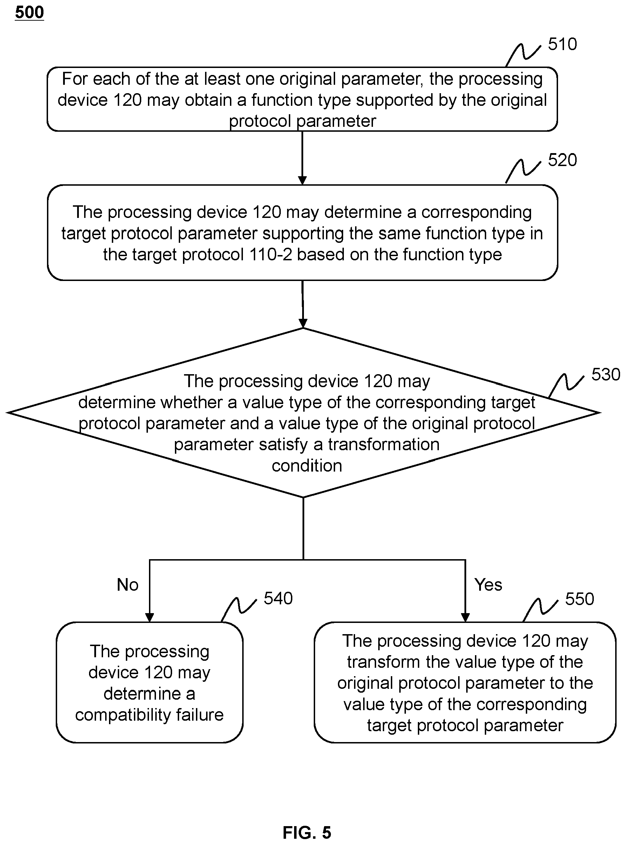

FIG. 5 is a flowchart illustrating an exemplary process for determining a compatible protocol according to some embodiments of the present disclosure. In some embodiments, process 500 may be executed by the protocol compatibility system 100. For example, the process 500 may be implemented as a set of instructions stored in a storage device. In some embodiments, the processing device 120 (e.g., the processor 210 of the computing device 200 and/or one or more modules illustrated in FIG. 3) may execute the set of instructions and may accordingly be directed to perform the process 500. The operations of the illustrated process presented below are intended to be illustrative. In some embodiments, the process 500 may be accomplished with one or more additional operations not described and/or without one or more of the operations discussed. Additionally, the order of the operations of process 500 illustrated in FIG. 5 and described below is not intended to be limiting.

In some embodiments, the process 500 may be performed by the compatibility module 340. In some embodiments, the process 500 may be performed for each of the at least one original protocol parameter.

In 510, for each of the at least one original parameter, the processing device 120 may obtain a function type supported by the original protocol parameter.

In 520, the processing device 120 may determine a corresponding target protocol parameter supporting the same function type in the target protocol 110-2 based on the function type.

In 530, the processing device 120 may determine whether a value type of the corresponding target protocol parameter and a value type of the original protocol parameter satisfy a transformation condition.

In some embodiments, the value type may include a floating-point type or an integer type. When a value type of a parameter is an integer type, its value can only be an integer. When a value type of a parameter is a floating-point type, its value can be an integer number or a floating-point number. For example, a parameter value of the floating-point type may include 2.0, 2.1, etc.; a parameter value of the integer type may include 2, etc.

The transformation condition may mean that the value type of the original protocol parameter can be transformed to the value type of the target protocol parameter. In some embodiments, the transformation condition may include that: when the value type of the original protocol parameter is an integer type, the value type of the target protocol parameter is also an integer type; when the value type of the original protocol parameter is a floating-point type, the value type of the target protocol parameter is also a floating-point type; when the value type of the original protocol parameter is an integer type, the value type of the target protocol parameter is a floating-point type; when the value type of the original protocol parameter is a floating-point type and the parameter value is an integer number, the value type of the target protocol parameter is an integer type.

In 540, in response to determining that the value type of the corresponding target protocol parameter and the value type of the original protocol parameter do not satisfy the transformation condition, the processing device 120 may determine a compatibility failure.

In 550, in response to determining that the value type of the corresponding target protocol parameter and the value type of the original protocol parameter satisfy the transformation condition, the processing device 120 may transform the value type of the original protocol parameter to the value type of the corresponding target protocol parameter.

In some embodiments, when the value type of the original protocol parameter is an integer type and the value type of the target protocol parameter is also an integer type; or when the value type of the original protocol parameter is a floating-point type and the value type of the target protocol parameter is also a floating-point type, the processing device 120 may determine that there is no need to transform the value type of the original protocol parameter.

In some embodiments, when the value type of the original protocol parameter is an integer type and the value type of the target protocol parameter is a floating-point type, the processing device 120 may modify the value type of the original protocol parameter to a floating-point type. For example, if the value of the original protocol parameter is 2 (i.e., value type of the original protocol parameter is an integer type), the processing device 120 may modify the value of the original protocol parameter to 2.0 (i.e., modify the value type of the original protocol parameter to a floating-point type).

In some embodiments, when the value type of the original protocol parameter is a floating-point type and the parameter value is an integer number, and the target protocol parameter is an integer type, the processing device 120 may modify the value type of the original protocol parameter value to an integer type. For example, if the value of the original protocol parameter is 2.0 (i.e., the value type of the original protocol parameter is a floating-point type and the parameter value is an integer number), the processing device 120 may modify the value of the original protocol parameter value to 2 (i.e., modify the value type of the original protocol parameter to an integer type).

It should be noted that the above description of the process 500 is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure.

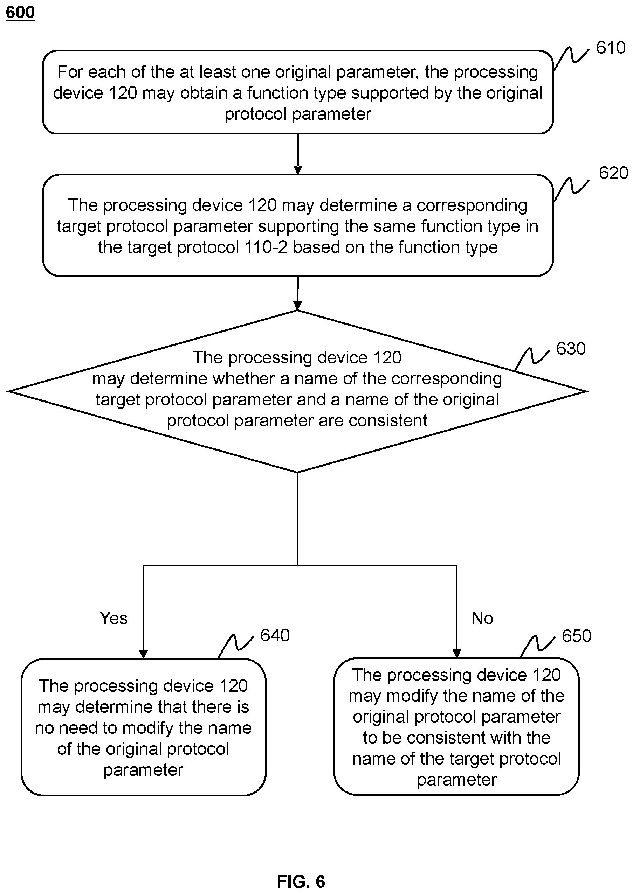

FIG. 6 is a flowchart illustrating an exemplary process for determining a compatible protocol according to some other embodiments of the present disclosure. In some embodiments, process 600 may be executed by the protocol compatibility system 100. For example, the process 600 may be implemented as a set of instructions stored in a storage device. In some embodiments, the processing device 120 (e.g., the processor 210 of the computing device 200 and/or one or more modules illustrated in FIG. 3) may execute the set of instructions and may accordingly be directed to perform the process 600. The operations of the illustrated process presented below are intended to be illustrative. In some embodiments, the process 600 may be accomplished with one or more additional operations not described and/or without one or more of the operations discussed. Additionally, the order of the operations of process 600 illustrated in FIG. 6 and described below is not intended to be limiting.

In some embodiments, the process 600 may be performed by the compatibility module 340. In some embodiments, the process 600 may be performed for each of the at least one original protocol parameter.

In 610, for each of the at least one original parameter, the processing device 120 may obtain a function type supported by the original protocol parameter.

In 620, the processing device 120 may determine a corresponding target protocol parameter supporting the same function type in the target protocol 110-2 based on the function type.

In 630, the processing device 120 may determine whether a name of the corresponding target protocol parameter and a name of the original protocol parameter are consistent.

In 640, in response to determining that the name of the corresponding target protocol parameter and the name of the original protocol parameter are consistent, the processing device 120 may determine that there is no need to modify the name of the original protocol parameter.

In 650, in response to determining that the name of the corresponding target protocol parameter and the name of the original protocol parameter are inconsistent, the processing device 120 may modify the name of the original protocol parameter to be consistent with the name of the target protocol parameter.

It should be noted that the above description of the process 600 is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure.

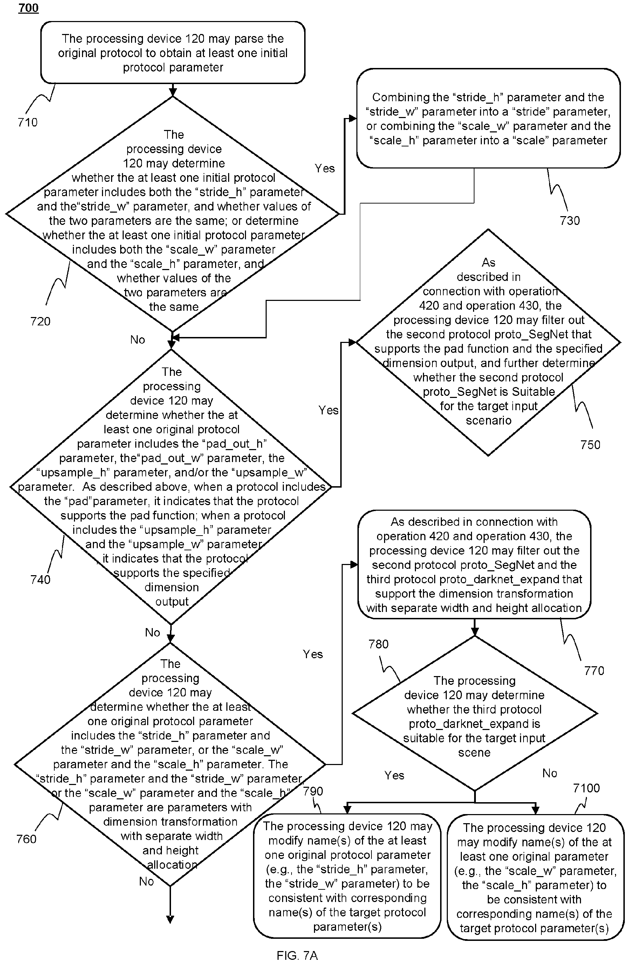

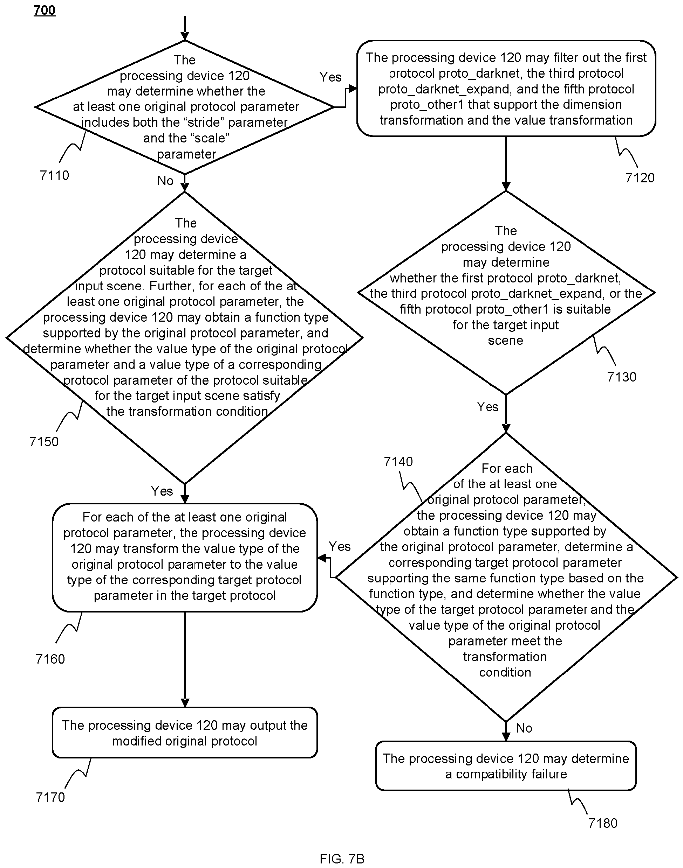

FIG. 7 is a flowchart illustrating an exemplary process for determining a compatible protocol according to some other embodiments of the present disclosure. The process 700 is described for illustrating a protocol compatibility process for protocols in an up-sampling layer of caffe.

In caffe framework, descriptions of layer protocols are realized based on caffe. proto file (which may be described based on Google's open source protobuf tool). A caffe model may include two files, one is a caffemodel file and the other is a prototxt file, both of which are parsed based on the caffe.proto file. The protocol compatibility process described below is realized by modifying the prototxt file.

The following are examples of several versions of the up-sampling layer protocols, wherein "int32," "uint32," and "float" indicate value types of the parameters, "int32" and "uint32" indicate the integer type, and "float" indicates the floating-point type.

A first protocol proto_darknet which includes parameters including "int32 stride" and "float scale."

A second protocol proto_SegNet which includes parameters including "uint32 scale," "uint32 scale_h," "uint32 scale_w," "pad_out_h," "pad_out_w," "uint32 upsample_h," and "uint32 upsample_w."

A third protocol proto_darknet_expand which includes parameters including "float scale," "int32 stride," "int32 stride_h," and "int32 stride_w."

A fourth protocol proto_other0 which includes the parameter "int32 stride."

A fifth protocol proto_other1 which includes parameters "int32 scale" and "int32 stride."

A sixth protocol proto_other2 which includes the parameter "float scale."

A seventh protocol proto_other3 which includes the parameter "int scale."

Take a specific protocol as an example, when the protocol includes only the "scale" parameter or the "stride" parameter, it indicates that the protocol supports the dimension transformation; when the protocol includes both the "scale" parameter and the "stride" parameter, it indicates that the protocol supports the dimension transformation and the value transformation, wherein "stride" indicates the dimension transformation and "scale" indicates the value transformation; when the protocol includes the "stride_h" parameter, the "stride_w" parameter, the "scale_w" parameter, and the "scale_h" parameter, it indicates that the protocol supports the dimension transformation with separate width and height allocation; when the protocol includes the "pad" parameter (e.g., the "pad_out_h" parameter, the "pad_out_w" parameter), it indicates that the protocol supports the pad function; when the protocol includes the "upsample_h" parameter and the "upsample_w" parameter, it indicates that the protocol supports the specified dimension output. The functions supported by each protocol are shown in the table below.

| **Protocol** | **Dimension transformation** | **Numerical transformation** | **Dimension transformation with separate width and height allocation** | **Pad** | **Specify dimension output** |
|---|---|---|---|---|---|
| proto_darknet | support | support | not support | not support | not support |
| proto_SegNet | support | not support | support | support | support |
| proto_darknet _expand | support | support | support | not support | not support |
| proto_other0 | support | not support | not support | not support | not support |
| proto_other1 | support | support | not support | not support | not support |
| proto_other2 | support | not support | not support | not support | not support |
| proto_other3 | support | not support | not support | not support | not support |

It is assumed that the above protocols are all included in the protocol set.

In 710, the processing device 120 may parse the original protocol (e.g., the prototxt text) to obtain at least one initial protocol parameter (e.g., at least one up-sampling layer parameter).

In 720, the processing device 120 may determine whether the at least one initial protocol parameter includes both the "stride_h" parameter and the "stride_w" parameter, and whether values of the two parameters are the same; or determine whether the at least one initial protocol parameter includes both the "scale_w" parameter and the "scale_h" parameter, and whether values of the two parameters are the same.

In response to determining that the at least one initial protocol parameter includes both the "stride_h" parameter and the "stride_w" parameter and the values of the two parameters are the same, or determining that the at least one initial protocol parameter includes both the "scale_w" parameter and the "scale_h" parameter and the values of the two parameters are the same, the processing device 120 may execute operation 730; otherwise, the processing device 120 may execute operation 740.

In 730, the processing device 120 may combine the "stride_h" parameter and the "stride_w" parameter into a "stride" parameter (which may be determined as the at least one original protocol parameter of the original protocol as described in connection with FIG. 4), or combine the "scale_w" parameter and the "scale_h" parameter into a "scale" parameter (which may be determined as the at least one original protocol parameter of the original protocol as described in connection with FIG. 4).

In 740, as described in connection with operation 415 and operation 420, the processing device 120 may determine whether the at least one original protocol parameter (or the at least one initial protocol parameter, since no combination operation is performed on the initial protocol parameters, the at least one initial protocol parameter can be considered as the at least one original protocol parameter) includes the "pad_out_h" parameter, the "pad_out_w" parameter, the "upsample_h" parameter, and/or the "upsample_w" parameter. As described above, when a protocol includes the "pad" parameter (e.g., the "pad_out_h" parameter, the "pad_out_w" parameter), it indicates that the protocol supports the pad function; when a protocol includes the "upsample_h" parameter and the "upsample_w" parameter, it indicates that the protocol supports the specified dimension output.

In response to determining that the at least one original protocol parameter (or the at least one initial protocol parameter) includes the "pad_out_h" parameter, the "pad_out_w" parameter, the "upsample_h" parameter, and/or the "upsample_w" parameter, the processing device 120 may execute operation 750; otherwise, the processing device 120 may execute operation 760.

In 750, as described in connection with operation 420 and operation 430, the processing device 120 may filter out the second protocol proto_SegNet that supports the pad function and the specified dimension output, and further determine whether the second protocol proto_SegNet is suitable for the target input scenario.

In response to determining that the second protocol proto_SegNet is suitable for the target input scene, the processing device 120 may determine the second protocol proto_SegNet as a target protocol and execute operation 7170; otherwise, it indicates that there is no protocol satisfying the at least one function type in the protocol and suitable for the target input scenario (i.e., no target protocol can be determined), the processing device 120 may execute operation 7180.

In 760, the processing device 120 may determine whether the at least one original protocol parameter includes the "stride_h" parameter and the "stride_w" parameter, or the "scale_w" parameter and the "scale_h" parameter. The "stride_h" parameter and the "stride_w" parameter, or the "scale_w" parameter and the "scale_h" parameter are parameters with dimension transformation with separate width and height allocation.

In response to determining that the at least one original protocol parameter includes the "stride_h" parameter and the "stride_w" parameter, or the "scale_w" parameter and the "scale_h" parameter, the processing device 120 may execute operation 770; otherwise, the processing device 120 may execute operation 7110.

In 770, as described in connection with operation 420 and operation 430, the processing device 120 may filter out the second protocol proto_SegNet and the third protocol proto_darknet_expand that support the dimension transformation with separate width and height allocation. As shown in the table above, both the second protocol proto_SegNet and the third protocol proto_darknet_expand support the dimension transformation with separate width and height allocation.

In 780, the processing device 120 may determine whether the third protocol proto_darknet_expand is suitable for the target input scene.

In response to determining that the third protocol proto_darknet_expand is suitable for the target input scene, the processing device 120 may determine the third protocol proto_darknet_expand as a target protocol and execute operation 790; otherwise, the processing device 120 may determine the second protocol proto_SegNet as a target protocol and execute operation 7100.

In 790, the processing device 120 may modify name(s) of the at least one original protocol parameter (e.g., the "stride_h" parameter, the "stride_w" parameter) to be consistent with corresponding name(s) of the target protocol parameter(s).

In 7100, the processing device 120 may modify name(s) of the at least one original parameter (e.g., the "scale_w" parameter, the "scale_h" parameter) to be consistent with corresponding name(s) of the target protocol parameter(s).

As described elsewhere in the present disclosure, value type(s) of the at least one original protocol parameter(s) also should be modified or transformed. Since all the value types in this embodiment are integers, there is no need to modify or transform the value type(s) of the at least one original protocol parameter(s) in this embodiment.

In 7110, the processing device 120 may determine whether the at least one original protocol parameter includes both the "stride" parameter and the "scale" parameter.

In response to determining that the at least one original protocol parameter includes both the "stride" parameter and the "scale" parameter, the processing device 120 may execute operation 7120; otherwise, the processing device 120 may execute operation 7150.

In 7120, the processing device 120 may filter out the first protocol proto_darknet, the third protocol proto_darknet_expand, and the fifth protocol proto_other1 that support the dimension transformation and the value transformation.

In 7130, the processing device 120 may determine whether the first protocol proto_darknet, the third protocol proto_darknet_expand, or the fifth protocol proto_other1 is suitable for the target input scene.

In response to determining that target input scene supports the three protocols, the value type of the parameter may be further determined.

In 7140, for each of the at least one original protocol parameter, the processing device 120 may obtain a function type supported by the original protocol parameter, determine a corresponding target protocol parameter supporting the same function type based on the function type, and determine whether the value type of the target protocol parameter and the value type of the original protocol parameter meet the transformation condition.

The transformation condition may mean that the value type of the original protocol parameter can be transformed to the value type of the target protocol parameter. In some embodiments, the transformation condition may include that: when the value type of the original protocol parameter is an integer type, the value type of the target protocol parameter is also an integer type; when the value type of the original protocol parameter is a floating-point type, the value type of the target protocol parameter is also a floating-point type; when the value type of the original protocol parameter is an integer type, the value type of the target protocol parameter is a floating-point type; when the value type of the original protocol parameter is a floating-point type, and the parameter value is an integer number, the value type pf the target protocol parameter is an integer type.

In response to determining that the value type of the target protocol parameter and the value type of the original protocol parameter satisfy the transformation condition, the processing device 120 may perform operation 7160; otherwise, the processing device 120 may perform operation 7180.

In 7150, the processing device 120 may determine a protocol suitable for the target input scene. Further, for each of the at least one original protocol parameter, the processing device 120 may obtain a function type supported by the original protocol parameter, and determine whether the value type of the original protocol parameter and a value type of a corresponding protocol parameter of the protocol suitable for the target input scene satisfy the transformation condition.

In response to determining that the value type of the original protocol parameter and a value type of a corresponding protocol parameter of the protocol suitable for the target input scene satisfy the transformation condition, the processing device 120 may perform operation 7160.

In 7160, for each of the at least one original protocol parameter, the processing device 120 may transform the value type of the original protocol parameter to the value type of the corresponding target protocol parameter in the target protocol (or the corresponding protocol parameter in the protocol suitable for the target input scene).

Further, for each of the at least one original protocol parameter, the processing device 120 may also determine whether a name of the corresponding target protocol parameter (or the corresponding protocol parameter in the protocol suitable for the target input scene) and a name of the original protocol parameter are consistent. In response to determining that the names are not consistent, the processing device 120 may modify the name of the original protocol parameter to be consistent with the name of the corresponding target protocol parameter (or the corresponding protocol parameter in the protocol suitable for the target input scene). Otherwise, there is no need to modify the name of the original protocol parameter.

In 7170, the processing device 120 may output the modified original protocol (i.e., the compatible protocol).

In 7180, the processing device 120 may determine a compatibility failure.

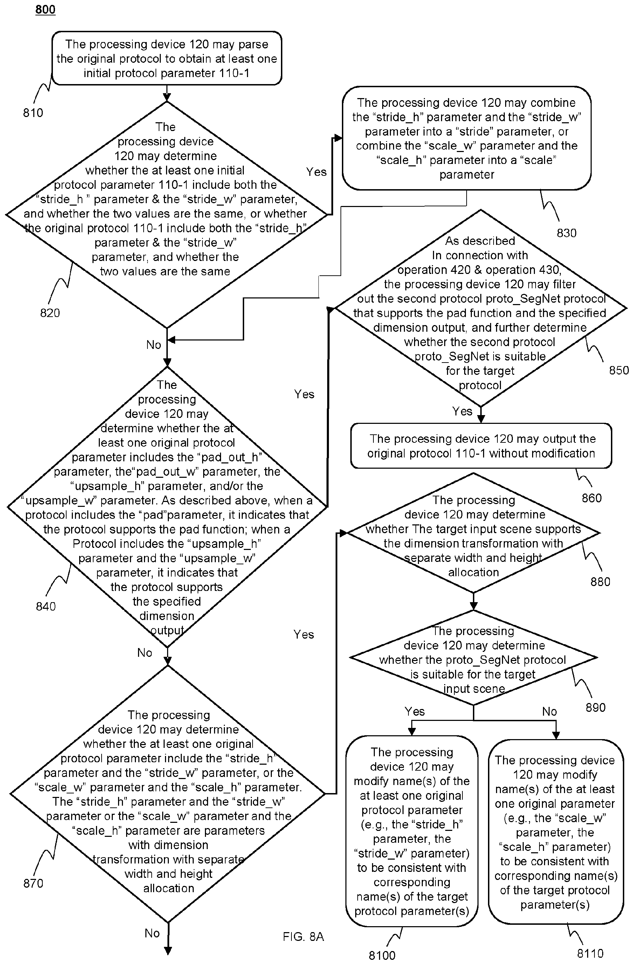

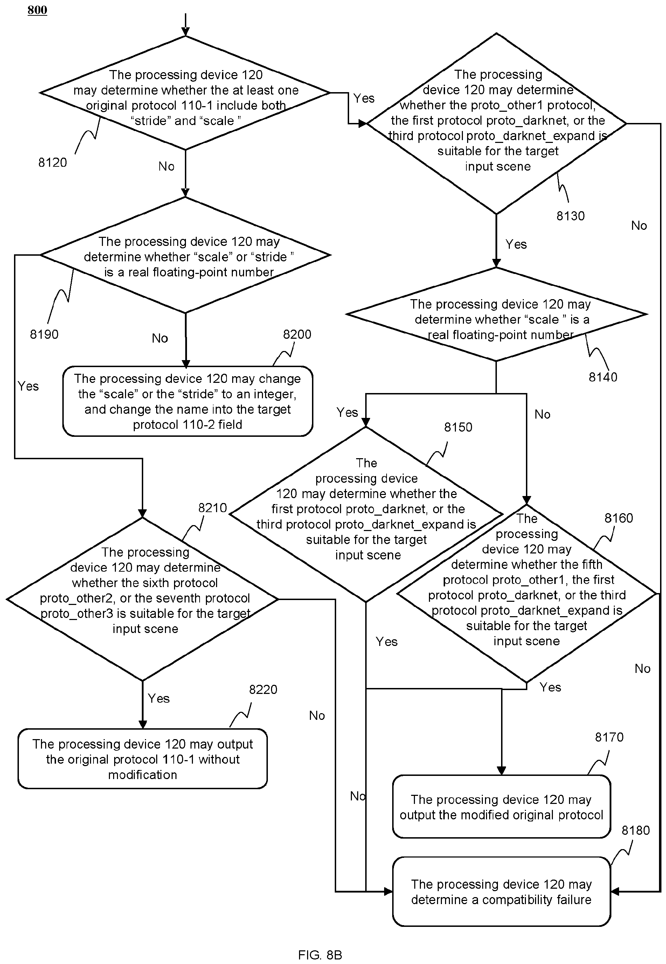

FIG. 8 is a flowchart illustrating an exemplary process for determining a compatible protocol according to some other embodiments of the present disclosure. The process 800 is described for illustrating a protocol compatibility process for protocols in an up-sampling layer of caffe.

The protocol compatibility process described below is realized by modifying the prototxt file.

As described in connection with FIG. 7, a protocol set includes seven protocols including the first protocol proto_darknet, the second protocol proto_SegNet, the third protocol proto_darknet_expand, the fourth protocol proto_other0, the fifth protocol proto_other1, the sixth protocol proto_other2, and the seventh protocol proto_other3.

In 810, the processing device 120 may parse the original protocol (e.g., the prototxt text) to obtain at least one initial protocol parameter 110-1 (e.g., at least one up-sampling layer parameter)

In 820, the processing device 120 may determine whether the at least one initial protocol parameter 110-1 include both the "stride_h" parameter and the "stride_w" parameter, and whether the two values are the same, or whether the original protocol 110-1 include both the "stride_h" parameter and the "stride_w" parameter, and whether the two values are the same.

In response to determining that the at least one initial protocol 110-1 includes both the "stride_h" parameter and the "stride_w" parameter with the same value, or include both the "scale_w" parameter and the "scale_h" parameter with the same value, the processing device 120 may execute operation 830, otherwise, the processing device 120 may execute operation 840.

In 830, the processing device 120 may combine the "stride_h" parameter and the "stride_w" parameter into a "stride" parameter (which may be determined as the at least one original protocol parameter 110-1 of the original protocol as described in connection with FIG. 4), or combine the "scale_w" parameter and the "scale_h" parameter into a "scale" parameter (which may be determined as the at least one original protocol parameter 110-1 of the original protocol as described in connection with FIG. 4).

In 840, as described in connection with operation 415 and operation 420, the processing device 120 may determine whether the at least one original protocol parameter (or the at least one initial protocol parameter, since no combination operation is performed on the initial protocol parameters, the at least one initial protocol parameter can be considered as the at least one original protocol parameter) includes the "pad_out_h" parameter, the "pad_out_w" parameter, the "upsample_h" parameter, and/or the "upsample_w" parameter. As described above, when a protocol includes the "pad" parameter (e.g., the "pad_out_h" parameter, the "pad_out_w"), it indicates that the protocol supports the pad function; when a protocol includes the "upsample_h" parameter and the "upsample_w" parameter, it indicates that the protocol supports the specified dimension output.

In response to determining that the original protocol 110-1 (or the at least one initial protocol parameter) include the "pad_out_h" parameter, the "pad_out_w" parameter, the "upsample_h" parameter, and/or the "upsample_w" parameter, the processing device 120 may execute operation 850; otherwise, the processing device 120 may execute operation 870.

In 850, as described in connection with operation 420 and operation 430, the processing device 120 may filter out the second protocol proto_SegNet protocol that supports the pad function and the specified dimension output, and further determine whether the second protocol proto_SegNet is suitable for the target protocol.

In response to determining that the second protocol proto_SegNet is suitable for the target protocol, the processing device 120 may determine the second protocol proto_SegNet as a target protocol and execute operation 860; otherwise, it indicates that there is no protocol satisfying the at least one function type in the protocol and suitable for the target input scenario (i.e., no target protocol can be determined), the processing device 120 may execute operation 8180.

In 860, the processing device 120 may output the original protocol 110-1 without modification.

In 870, the processing device 120 may determine whether the at least one original protocol parameter include the "stride_h" parameter and the "stride_w" parameter, or the "scale_w" parameter and the "scale_h" parameter. The "stride_h" parameter and the "stride_w" parameter or the "scale_w" parameter and the "scale_h" parameter are parameters with dimension transformation with separate width and height allocation

In response to determining that the at least one original protocol 110-1 includethe "stride_h" parameter and the "stride_w" parameter, or the "scale_w" parameter and the "scale_h" parameter, the processing device 120 may execute operation 880; otherwise, the processing device 120 may execute operation 8120.

In 880, the processing device 120 may determine whether the target input scene supports the dimension transformation with separate width and height allocation.

In response to determining that the target input scene supports the dimension transformation with separate width and height allocation, the processing device 120 may execute operation 890; otherwise, the processing device 120 may execute operation 8180.

In 890, the processing device 120 may determine whether the second protocol proto_SegNet is suitable for the target input scene.

In response to determining that the target input scene supports the second protocol proto_SegNet, the processing device 120 may execute operation 8100; otherwise, the processing device 120 may execute operation 8110.

In 8100, the processing device 120 may modify name(s) of the at least one original protocol parameter (e.g., the "stride_h" parameter, the "stride_w" parameter) to be consistent with corresponding name(s) of the target protocol parameter(s).

In 8110, the processing device 120 may modify name(s) of the at least one original parameter (e.g., the "scale_w" parameter, the "scale_h" parameter) to be consistent with corresponding name(s) of the target protocol parameter(s).

As described elsewhere in the present disclosure, value type(s) of the at least one original protocol parameter(s) also should be modified or transformed. Since all the value types in this embodiment are integers, there is no need to modify or transform the value type(s) of the at least one original protocol parameter(s) in this embodiment.

In 8120, the processing device 120 may determine whether the at least one original protocol parameter includes both the "stride" parameter and the "scale" parameter.

In response to determining that the at least one original protocol parameter includes both the "stride" parameter and the "scale" parameter, the processing device 120 may execute operation 8130, otherwise, the processing device 120 may execute operation 8190.

In 8130, the processing device 120 may determine whether the proto_other1 protocol, the first protocol proto_darknet, or the third protocol proto_darknet_expand is suitable for the target input scene.

In response to that the target protocol may be filtered out, the processing device 120 may execute operation 8140, otherwise, the processing device 120 may execute operation 8180.

In 8140, the processing device 120 may determine whether "scale" is a real floating-point number.

As the "scales" of the first protocol proto_darknet and the third protocol proto_darknet_expand are floating-point type, and the "scale" of the fifth protocol proto_other1 is the integer type, when the "scale" is a real floating-point number, the target protocol is the first protocol proto_darknet or the third protocol proto_darknet_expand, when the "scale" is not a real floating-point number, the target protocol may be the fifth protocol proto_other1, the first protocol proto_darknet, or the third protocol proto_darknet_expand.

In response to that the "scale" is a real floating-point number, the processing device 120 may execute operation 8150; otherwise, the processing device 120 may execute operation 8160.

In 8150, the processing device 120 may determine whether the first protocol proto_darknet, or the third protocol proto_darknet_expand is suitable for the target input scene.

In response to determining that the first protocol proto_darknet, or the third protocol proto_darknet_expand is suitable for the target input scene is suitable for the target input scene, , the processing device 120 may determine the first protocol proto_darknet, or the third protocol proto_darknet_expand as a target protocol and execute operation 8170; otherwise, it indicates that there is no protocol satisfying the at least one function type in the protocol and suitable for the target input scene (i.e., no target protocol can be determined), the processing device 120 may execute operation 8180.

In 8160, the processing device 120 may determine whether the fifth protocol proto_other1, the first protocol proto_darknet, or the third protocol proto_darknet_expand is suitable for the target input scene.

In response to determining that the fifth protocol proto_other1, the first protocol proto_darknet, or the third protocol proto_darknet_expand is suitable for the target input scene, the processing device 120 may determine the fifth protocol proto_other1 protocol, the first protocol proto_darknet, or the third protocol proto_darknet_expand as a target protocol and execute operation 8170; otherwise, the compatibility cannot be achieved, the file transformation may fail, and the processing device 120 may execute operation 8180.

In 8170, the processing device 120 may output the modified original protocol (i.e., the compatible protocol).

In 8180, the processing device 120 may determine a compatibility failure.

In 8190, the processing device 120 may determine whether "scale" or "stride" is a real floating-point number.

When the original protocol parameter includes only the "scale" parameter or the "stride" parameter, it indicates that the protocol supports the dimension transformation. When the "scale" or the "stride" is the real floating-point number, the target protocol may only be the sixth protocol proto_other2 or the seventh protocol proto_other3.

In response to that the "scale" or the "stride" is the real floating-point number, the processing device 120 may execute operation 8210; otherwise, the processing device 120 may execute operation 8200.

In 8200, the processing device 120 may change the "scale" or the "stride" to an integer, and change the name into the target protocol 110-2 field.

In 8210, the processing device 120 may determine whether the sixth protocol proto_other2, or the seventh protocol proto_other3 is suitable for the target input scene.

In response to that the sixth protocol proto_other2, or the seventh protocol proto_other3 is suitable for the target input scene, the processing device 120 may determine the sixth protocol proto_other2, or the seventh protocol proto_other3 as a target protocol, and execute operation 8220; otherwise, it indicates that there is no protocol satisfying the at least one function type in the protocol and suitable for the target input scenario (i.e., no target protocol can be determined), the processing device 120 may execute operation 8180

In 8220, the processing device 120 may output the original protocol 110-1 without modification.

In some embodiments, the present disclosure provides a computer-readable storage medium storing computer instructions, wherein when the computer instructions are executed by a processor, the processor executes a method comprising: obtaining an original protocol 110-1 supported by a machine learning framework; determining at least one function type supported by the original protocol 110-1; determining a filter condition based on the at least one function type; filtering out, from a protocol set, a target protocol 110-2 satisfying the at least one function type based on the filter condition; and determining a compatible protocol 110-3 based on the target protocol 110-2 and the original protocol 110-1.

It should be noted that the above description is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of the present disclosure are not necessarily all referring to the same embodiment. Furthermore, the particular features, structures, or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or collocation of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer-readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 2103, Perl, COBOL 2102, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, for example, an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

In some embodiments, the numbers expressing quantities or properties used to describe and claim certain embodiments of the application are to be understood as being modified in some instances by the term "about," "approximate," or "substantially." For example, "about," "approximate," or "substantially" may indicate ±1 %, ±5%, ±10%, or ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

Each of the patents, patent applications, publications of patent applications, and other material, such as articles, books, specifications, publications, documents, things, and/or the like, referenced herein is hereby incorporated herein by this reference in its entirety for all purposes, excepting any prosecution file history associated with same, any of same that is inconsistent with or in conflict with the present document, or any of same that may have a limiting effect as to the broadest scope of the claims now or later associated with the present document. By way of example, should there be any inconsistency or conflict between the description, definition, and/or the use of a term associated with any of the incorporated material and that associated with the present document, the description, definition, and/or the use of the term in the present document shall prevail.

In closing, it is to be understood that the embodiments of the application disclosed herein are illustrative of the principles of the embodiments of the application. Other modifications that may be employed may be within the scope of the application. Thus, by way of example, but not of limitation, alternative configurations of the embodiments of the application may be utilized in accordance with the teachings herein. Accordingly, embodiments of the present application are not limited to that precisely as shown and described.

## Claims

1. A method for protocol compatibility, comprising:
obtaining (410) an original protocol (110-1) supported by a machine learning framework;
determining (415) at least one function type supported by the original protocol (110-1);
determining (420) a filter condition based on the at least one function type;
filtering out (430), from a protocol set, a target protocol (110-2) satisfying the at least one function type based on the filter condition; and
determining (440) a compatible protocol (110-3) based on the target protocol (110-2) and the original protocol (110-1).

2. The method of claim 1, wherein the method further comprises:
in response to determining that there is no protocol satisfying the at least one function type in the protocol set based on the filter condition, determining a compatibility failure.

3. The method of claim 1, wherein the determining (415) at least one function type supported by the original protocol (110-1) includes:
obtaining at least one original protocol parameter of the original protocol (110-1) by:
determining at least one initial protocol parameter of the original protocol (110-1);
determining whether the at least one initial protocol parameter includes a first protocol parameter and a second protocol parameter with a same function type and a same value; and
in response to determining that the at least one initial protocol parameter includes the first protocol parameter and the second protocol parameter with the same function type and the same value, determining a third protocol parameter corresponding to the function type based on the first protocol parameter and the second protocol parameter as one of the at least one original protocol parameter; and
determining the at least one function type supported by the original protocol (110-1) based on the at least one original protocol parameter.

4. The method of claim 1, wherein the original protocol (110-1) and protocols included in the protocol set correspond to a same layer of the machine learning framework.

5. The method of claim 1, wherein in response to determining that the at least one function type includes at least two function types, the filtering out (430), from a protocol set, a target protocol (110-2) satisfying the at least one function type includes:
performing multiple filter operations on protocols in the protocol set based on the filter condition, wherein the multiple filter operations at least include:
performing a first filter operation on the protocols in the protocol set based on a first function type;
determining a first filtered protocol set based on a filter result of the first filter operation; and
performing a second filter operation on protocols in the first filtered protocol set based on a second function type.

6. The method of claim 1, wherein in response to determining that the at least one function type includes a preset function type, the filtering out (430), from a protocol set, a target protocol (110-2) satisfying the at least one function type based on the filter condition includes:
determining whether the protocol set includes one or more protocols supporting the preset function type;
in response to determining that there is no protocol supporting the preset function type in the protocol set, determining a compatibility failure; and
in response to determining that the protocol set includes one or more protocols supporting the preset function type, filtering out the one or more protocols supporting the preset function type and determining the target protocol (110-2) based on the one or more protocols.

7. The method of claim 1, wherein in response to determining that the at least one function type includes a plurality of function types, the filtering out (430), from a protocol set, a target protocol (110-2) satisfying the at least one function type based on the filter condition includes:
determining whether the protocol set includes one or more protocols supporting all the plurality of function types;
in response to determining that there is no protocol supporting all the plurality of function types in the protocol set, determining a compatibility failure; and
in response to determining that the protocol set includes one or more protocols supporting all the plurality of function types, filtering out the one or more protocols supporting all the plurality of function types and determining the target protocol (110-2) based on the one or more protocols.

8. The method of claim 1, wherein the at least one function type includes at least one of a dimension transformation, a value transformation, a dimension transformation with separate width and height allocation, a pad function, or a specified dimension output.

9. The method of claim 8, wherein in response to determining the at least one function type includes the pad function and/or the specified dimension output, the filtering out (430), from a protocol set, a target protocol (110-2) satisfying the at least one function type based on the filter condition includes:
determining whether the protocol set includes one or more protocols supporting the pad function or the specified dimension output;
in response to determining that there is no protocol supporting the pad function or the specified dimension output in the protocol set, determining a compatibility failure; and
in response to determining that the protocol set includes one or more protocols supporting the pad function or the specified dimension output, filtering out the one or more protocols supporting the pad function or the specified dimension output and determining the target protocol (110-2) based on the one or more protocols.

10. The method of claim 8, wherein in response to determining that the at least one function type includes the dimension transformation and the value transformation, the filtering out (430), from a protocol set, a target protocol (110-2) satisfying the at least one function type based on the filter condition includes:
determining whether the protocol set includes one or more protocols supporting both the dimension transformation and the value transformation;
in response to determining that there is no protocol supporting both the dimension transformation and the value transformation in the protocol set, determining a compatibility failure; and
in response to determining that the protocol set includes one or more protocols supporting both the dimension transformation and the value transformation, filtering out the one or more protocols supporting both the dimension transformation and the value transformation and determining the target protocol (110-2) based on the one or more protocols.

11. The method of claim 1, wherein the determining (440) a compatible protocol (110-3) based on the target protocol (110-2) and the original protocol (110-1) comprises:
obtaining at least one original protocol parameter of the original protocol (110-1);
modifying at least one name of the at least one original protocol parameter and/or at least one value type of the at least one original protocol parameter based on at least one target protocol parameter of the target protocol (110-2); and
determining (440) the compatible protocol (110-3) based on the at least one modified protocol parameter.

12. The method of claim 11, wherein the modifying at least one name of the at least one original protocol parameter and/or at least one value type of the at least one original protocol parameter based on at least one target protocol parameter of the target protocol (110-2) comprises:
for each of the at least one original protocol parameter,
obtaining (510) a function type supported by the original protocol parameter;
determining (520) a corresponding target protocol parameter supporting the same function type in the target protocol (110-2) based on the function type;
determining (530) whether a value type of the corresponding target protocol parameter and a value type of the original protocol parameter satisfy a transformation condition;
in response to determining that the value type of the corresponding target protocol parameter and the value type of the original protocol parameter do not satisfy the transformation condition, determining (540) a compatibility failure; and
in response to determining that the value type of the corresponding target protocol parameter and the value type of the original protocol parameter satisfy the transformation condition, transforming (550) the value type of the original protocol parameter to the value type of the corresponding target protocol parameter.

13. The method of claim 11, wherein the modifying at least one name of the at least one original protocol parameter and/or at least one value type of the at least one original protocol parameter based on at least one target protocol parameter of the target protocol (110-2) comprises:
for each of the at least one original protocol parameter,
obtaining (610) a function type supported by the original protocol parameter;
determining (620) a corresponding target protocol parameter supporting the same function type in the target protocol (110-2) based on the function type;
determining (630) whether a name of the corresponding target protocol parameter and a name of the original protocol parameter are consistent;
in response to determining that the name of the corresponding target protocol parameter and the name of the original protocol parameter are inconsistent, modifying (640) the name of the corresponding original protocol parameter to be consistent with the name of the target protocol parameter; and
in response to determining that the name of the corresponding target protocol parameter and the name of the original protocol parameter are consistent, determining (650) that there is no need to modify the name of the original protocol parameter.

14. A system for protocol compatibility, comprising:
an obtaining module (310), configured to obtain an original protocol (110-1) supported by a machine learning framework;
a first determination module (315), configured to determine at least one function type supported by the original protocol (110-1);
a second determination module (320), configured to determine a filter condition based on the at least one function type;
a filter module (330), configured to filter out, from a protocol set, a target protocol (110-2) satisfying the at least one function type based on the filter condition; and
a compatibility module (340), configured to determine a compatible protocol (110-3) based on the target protocol (110-2) and the original protocol (110-1).

15. A computer-readable storage medium storing computer instructions, wherein when the computer instructions are executed by a processor, the processor executes a method comprising:
obtaining (410) an original protocol (110-1) supported by a machine learning framework;
determining (415) at least one function type supported by the original protocol (110-1);
determining (420) a filter condition based on the at least one function type;
filtering out (430), from a protocol set, a target protocol (110-2) satisfying the at least one function type based on the filter condition; and
determining (440) a compatible protocol (110-3) based on the target protocol (110-2) and the original protocol (110-1).
